# EUROPEAN PATENT SPECIFICATION

(11) **EP 3 410 526 B1**
(45) Date of publication and mention of the grant of the patent: **26.02.2020**
(21) Application number: 17743580.7
(22) Date of filing: 16.01.2017
(51) Int. Cl.: H01M 8/18, C01G 31/02

(54) **SYSTEM AND METHOD FOR PREPARING HIGH-ACTIVITY SPECIFIC-VALENCE-STATE ELECTROLYTE OF ALL-VANADIUM FLOW BATTERY**
SYSTEM UND VERFAHREN ZUR HERSTELLUNG EINES HOCHAKTIVEN ELEKTROLYTEN MIT SPEZIFISCHEM VALENZZUSTAND EINER VANADIUMFLUSSBATTERIE
SYSTÈME ET PROCÉDÉ DE PRÉPARATION D'ÉLECTROLYTE DE VALENCE SPÉCIFIQUE À HAUTE ACTIVITÉ DE BATTERIE RÉDOX TOUT EN VANADIUM

(30) Priority: 28.01.2016 CN 201610059741
(43) Date of publication of application: 05.12.2018
(73) Proprietor: Institute of Process Engineering, Chinese Academy of Sciences, Beijing 100190 (CN); Beijing Zhongkaihongde Technology Co., Ltd., Beijing 100088 (CN)
(72) Inventor: ZHU, Qingshan, Beijing 100190 (CN); YANG, Haitao, Beijing 100190 (CN); FAN, Chuanlin, Beijing 100190 (CN); MU, Wenheng, Beijing 100088 (CN); LIU, Jibin, Beijing 100088 (CN); WANG, Cunhu, Beijing 100088 (CN); BAN, Qixun, Beijing 100088 (CN)
(74) Representative: Hanna Moore + Curley
(86) International application number: PCT/CN2017/071203
(87) International publication number: WO 2017/128965

(56) References cited:
- WO-A1-2013/027076
- WO-A1-2013/027076
- CN-A- 101 880 059
- CN-A- 102 011 135
- CN-A- 103 606 694
- CN-A- 104 894 366
- CN-A- 104 911 334
- CN-A- 105 190 978
- CN-A- 106 257 725
- JP-A- H10 125 345

## Description

### TECHNICAL FIELD

The present invention relates to the fields of energy and chemical engineering, and more particularly to a system and method for preparing a high-activity specific-valence electrolyte of an all-vanadium redox flow battery.

### BACKGROUND

Traditional fossil fuels have always been the main source of energy, however, long-term exploitation and heavy use results in depletion of resources and also brings about serious environmental pollution. The development and utilization of clean renewable energy sources such as wind, water, solar, and tidal energies have gradually attracted the attention of human society. However, renewable energy sources are difficult to be effectively used by the existing energy management systems due to their inherent intermittence.

Energy storage technology is one of ways to solve such problems. In various kinds of energy storage systems, the all-vanadium redox flow battery (VRB) is an attractive energy storage device. The biggest advantage of VRB is its flexibility - power and energy storage capacity are independent. The power of VRB depends on the number of battery cells and the effective electrode area of battery cells, while the energy storage capacity depends on the concentration of the active material in the electrolyte and the volume of the electrolyte. Each battery cell consists of two electrode chambers (positive and negative electrode chambers) separated by a proton exchange membrane. The electrolyte, that is the sulfate solution of vanadium, is used to store energy. When the electrolyte flows through the battery cell, redox reactions of V(IV)/V(V) and V(II)/V(III) occur in the positive and negative electrode chambers, respectively.

The methods for preparing the VRB electrolyte are as follows: (1) VOSO₄ method: U.S. Patent US849094 discloses a mixed vanadium electrolyte with a concentration ratio of V(III) to V(IV) of 1:1, which is prepared by dissolving VOSO₄ in a sulfuric acid solution, and then adjusting the valence state electrochemically. The main problem of this method lies in the more complicated preparation process of VOSO₄ and high price, which is not conducive to the large-scale application in VRB. (2) Chemical reduction method: Chinese patent CN101562256 discloses a mixed vanadium electrolyte of V(III) and V(IV), which is prepared by adding a reducing agent such as oxalic acid, butyraldehyde, etc. to the mixed system of V₂O₅ and a sulfuric acid solution, and keeping the mixture at 50-100 °C for 0.5-10 hours for chemical reduction. The main problem of the method lies in that it is not easy to control the degree of reduction, and addition of the reducing agent will introduce a new impurity into the vanadium electrolyte system. (3) Electrolytic method: International PCT patent PCT/AU1988/000471 describes a mixed vanadium electrolyte with a concentration ratio of V(III) to V(IV) of 1:1, which is prepared by adding the activated V₂O₅ to a sulfuric acid solution, and then performing constant current electrolysis. Preparation of the vanadium electrolyte by the electrolytic method is suitable for large-scale production of the electrolyte, but the process requires a preliminary activating treatment, which needs an additional electrolysis device and consumes electrical energy. (4) Method by dissolving a low-valence vanadium oxide: Chinese patent CN101728560A discloses that the high-purity V₂O₃ is used as a raw material and dissolved in 1:1 dilute sulfuric acid at a temperature of 80-150 °C to prepare a solution of V₂(SO₄)₃ used as a negative electrode electrolyte. The process is operated at a temperature of 80-150 °C (at which temperature the V(III) vanadium ion hydrate is prone to form an oxygen-bridge bond, leading to the production of polycondensation and thus a decreased electrolyte activity), and lacks an activation step. This method can only be used to prepare a negative electrode electrolyte with a narrow application area. Chinese patent CN102468509A discloses a method for preparing a vanadium battery electrolyte, which comprises: preparing V₂O₃ by segmented calcination at 200-300 °C and 600-700 °C with ammonium metavanadate and ammonium bicarbonate as raw materials, dissolving V₂O₃ in a dilute sulfuric acid and reacting for 5-20 hours at 50-120 °C to obtain a V₂(SO₄)₃ solution, and dissolving V₂O₅ in the V₂(SO₄)₃ solution and reacting for 1-3 hours at 80-110 °C to obtain a vanadium battery electrolyte with an average vanadium ion valence of 3.5. The V₂(SO₄)₃ solution is prepared as the negative electrode electrolyte in this patent. The method also has the problems of long-time dissolution operation at a higher temperature (at which temperature the V(III) vanadium ion hydrate is prone to form an oxygen-bridge bond, leading to the production of polycondensation and thus a decreased electrolyte activity), and lack of an activation step. Chinese patent CN103401010A discloses a method for preparing an all-vanadium redox flow battery electrolyte, which comprises: reducing V₂O₅ powder in hydrogen gas to prepare V₂O₄ powder and V₂O₃ powder, dissolving V₂O₄ and V₂O₃ in the concentrated sulfuric acid respectively to obtain the positive and negative electrode electrolytes of the vanadium battery. The main problem of the patent lies in that no specific reduction process is provided. The V₂O₄ powder is prepared by reducing V₂O₅ in hydrogen gas, however, in the process, over-reduction or under-reduction is prone to occur and the process only can be achieved by precise control, but the patent does not provide measures about the precise control of reduction. Chinese patents CN101880059A and CN102557134A disclose a fluidized reduction furnace and reduction method for producing high-purity vanadium trioxide, wherein a heat transfer internal member is added in a fluidized bed to achieve the enhanced heat transfer; and cyclone preheating is used to increase the energy utilization rate and realize the efficient preparation of V₂O₃. However, since the systems do not have the function of precise control of reduction, the methods described in these two patents are only suitable for the preparation of V₂O₃ and not suitable for the preparation of other low-valence vanadium oxides.

Patent specification JP H10 125345 describes a method for easily manufacturing a high-concentration solution of vanadium for a redox battery at low cost. Patent specification WO 2013/027076 A1 describes a method of producing an acid solution of vanadium from vanadium pentoxide of mineral origin. Patent specification CN 104 911 334 A describes a manganese dioxide ore fluidized reduction system. Patent specification CN 104 894 366 A describes a system and a method of low-grade manganese dioxide ore fluidization reduction.

In summary, there is an urgent need in the art to solve the disadvantages of the process and technology for preparation of the all-vanadium redox flow battery electrolyte, so as to provide a system and method for preparing a VRB electrolyte simply and quickly, with low cost, short process, controllable valence state and high activity.

### SUMMARY OF THE INVENTION

In view of the above problems, the present invention proposes a system and method for preparing a high-activity specific-valence electrolyte of an all-vanadium redox flow battery, to implement the preparation of a VRB electrolyte simply and quickly, with low cost, short process, controllable valence state and high activity. In order to achieve these objectives, the present invention adopts the following technical solutions.

The present invention provides a system for preparing a high-activity specific-valence electrolyte of an all-vanadium redox flow battery, comprising a vanadium-containing material feeding device 1, a vanadium-containing material preheating device 2, a reduction fluidized bed device 3, a low-valence vanadium oxide pre-cooling device 4, a low-valence vanadium oxide secondary cooling device 5, a low-valence vanadium oxide feeding device 6, a dissolution reactor 7, and an electrolyte activation device 8;
wherein the vanadium-containing material feeding device 1 comprises a vanadium-containing material hopper 1-1 and a vanadium-containing material screw feeder 1-2;
the vanadium-containing material preheating device 2 comprises a venturi preheater 2-1, a cyclone preheater 2-2 and a first cyclone separator 2-3;
the reduction fluidized bed 3 comprises a vanadium-containing material feeder 3-1, a reduction fluidized bed body 3-2, a reduction fluidized bed cyclone separator 3-3, a reduction fluidized bed discharger 3-4, a reduction fluidized bed preheater 3-5, and a reducing gas purifier 3-6;
the low-valence vanadium oxide pre-cooling device 4 comprises a venturi cooler 4-1, a cyclone cooler 4-2, and a second cyclone separator 4-3;
the low-valence vanadium oxide feeding device 6 comprises a low-valence vanadium oxide hopper 6-1 and a low-valence vanadium oxide screw feeder 6-2;
wherein a feed outlet at the bottom of the vanadium-containing material hopper 1-1 is connected with a feed inlet of the vanadium-containing material screw feeder 1-2; and a feed outlet of the vanadium-containing material screw feeder 1-2 is connected with a feed inlet of the venturi preheater 2-1 through a pipeline;
a gas inlet of the venturi preheater 2-1 is connected with a gas outlet of the reduction fluidized bed cyclone separator 3-3 through a pipeline; a feed outlet of the venturi preheater 2-1 is connected with a feed inlet of the cyclone preheater 2-2 through a pipeline; a feed outlet of the cyclone preheater 2-2 is connected with a feed inlet of the vanadium-containing material feeder 3-1 through a pipeline; a gas outlet of the cyclone preheater 2-2 is connected with a gas inlet of the first cyclone separator 2-3 through a pipeline; a gas outlet of the first cyclone separator 2-3 is connected with a tail gas treatment system through a pipeline; and a feed outlet of the first cyclone separator 2-3 is connected with the feed inlet of the vanadium-containing material feeder 3-1 through a pipeline;
a feed outlet of the vanadium-containing material feeder 3-1 is connected with a feed inlet of the reduction fluidized bed 3-2 through a pipeline; an aeration air inlet of the vanadium-containing material feeder 3-1 is connected with a nitrogen gas main pipe through a pipeline; a gas outlet of the reduction fluidized bed 3-2 is connected with a gas inlet of the reduction fluidized bed cyclone separator 3-3 through a pipeline; a feed outlet of the reduction fluidized bed cyclone separator 3-3 is connected with a feed inlet of the reduction fluidized bed discharger 3-4 through a pipeline; a feed outlet of the reduction fluidized bed 3-2 is connected with the feed inlet of the reduction fluidized bed discharger 3-4 through a pipeline; a feed outlet of the reduction fluidized bed discharger 3-4 is connected with a feed inlet of the venturi cooler 4-1 through a pipeline; an aeration air inlet of the reduction fluidized bed discharger 3-4 is connected with a purified nitrogen gas main pipe through a pipeline; a reducing gas inlet of the reduction fluidized bed 3-2 is connected with a gas outlet of the reducing gas preheater 3-5 through a pipeline; a gas inlet of the reducing gas preheater is connected with a gas outlet of the second cyclone separator 4-3 through a pipeline; a gas inlet of the reducing gas preheater is connected with a gas outlet of the reducing gas purifier 3-6 through a pipeline; a gas inlet of the reducing gas purifier 3-6 is connected with a reducing gas main pipe through a pipeline; and an air inlet and a fuel inlet of the reducing gas preheater 3-5 are connected with a compressed air main pipe and a fuel main pipe, respectively;
a gas inlet of the venturi cooler 4-1 is connected with the purified nitrogen gas main pipe through a pipeline; a feed outlet of the venturi cooler 4-1 is connected with a feed inlet of the cyclone cooler 4-2 through a pipeline; a feed outlet of the cyclone cooler 4-2 is connected with a feed inlet of the low-valence vanadium oxide secondary cooling system 5 through a pipeline; a gas outlet of the cyclone cooler 4-2 is connected with a gas inlet of the second cyclone separator 4-3 through a pipeline; and a feed outlet of the second cyclone separator 4-3 is connected with a feed inlet of the low-valence vanadium oxide secondary cooling device 5 through a pipeline;
a feed outlet of the low-valence vanadium oxide secondary cooling device 5 is connected with a feed inlet of the low-valence vanadium oxide hopper 6-1 through a pipeline; a cooling water inlet of the low-valence vanadium oxide secondary cooling device 5 is connected with a process water main pipe through a pipeline; and a cooling water outlet of the low-valence vanadium oxide secondary cooling device 5 is connected with a water cooling system through a pipeline;
a feed outlet at the bottom of the low-valence vanadium oxide hopper 6-1 is connected with a feed inlet of the low-valence vanadium oxide screw feeder 6-2; and a feed outlet of the low-valence vanadium oxide screw feeder 6-2 is connected with a feed inlet of the dissolution reactor 7 through a pipeline;
a clean water inlet of the dissolution reactor 7 is connected with a clean water main pipe through a pipeline; a concentrated sulfuric acid inlet of the dissolution reactor 7 is connected with a concentrated sulfuric acid main pipe through a pipeline; a gas outlet of the dissolution reactor 7 is connected with a gas inlet of the tail gas treatment system through a pipeline; and an electrolyte outlet of the dissolution reactor 7 is connected with an electrolyte inlet of the electrolyte activation device 8 through a pipeline.

The present invention further provides a method for preparing a high-activity specific-valence electrolyte of an all-vanadium redox flow battery based on the above system, which comprises the following steps:
allowing vanadium-containing material from the vanadium-containing material hopper 1-1 to enter the venturi preheater 2-1, the cyclone preheater 2-2 and the first cyclone separator 2-3 in turn through the vanadium-containing material screw feeder 1-2, and then enter the reduction fluidized bed body 3-2 through the vanadium-containing material feeder 3-1; allowing the powder entrained in the high-temperature tail gas discharged from the reduction fluidized bed body 3-2 to be collected by the reduction fluidized bed cyclone separator 3-3 and then enter the feed inlet of the reduction fluidized bed discharger 3-4; making the reduced low-valence vanadium oxide be discharged from a feed outlet of the reduction fluidized bed body 3-2, and enter the venturi cooler 4-1 and the cyclone cooler 4-2 in turn through the reduction fluidized bed discharger 3-4, and enter the low-valence vanadium oxide secondary cooling device 5 and the low-valence vanadium oxide hopper 6-1 together with the powder material recovered by the second cyclone separator 4-3; allowing the material to enter the dissolution reactor 7 through the low-valence vanadium oxide screw feeder 6-2, and be subjected to dissolution reaction together with clean water from the clean water main pipe and concentrated sulfuric acid from the concentrated sulfuric acid main pipe to obtain a primary electrolyte; and allowing the primary electrolyte in the dissolution reactor 7 to enter the electrolyte activation device 8 through a pipeline with a valve, and be activated to obtain the high-activity specific-valence electrolyte of an all-vanadium redox flow battery;
wherein purified nitrogen gas enters the venturi cooler 4-1, the cyclone cooler 4-2 and the second cyclone separator 4-3 in turn, and is mixed with the reducing gas purified by the reducing gas purifier 3-6 and preheated by the reduction fluidized bed preheater 3-5, and then enters the reduction fluidized bed body 3-2, such that the vanadium-containing material powder is kept at a fluidized state and reduced; the high-temperature tail gas after reduction enters the reduction fluidized bed cyclone separator 3-3, the venturi preheater 2-1 and the cyclone preheater 2-2 in turn, and finally is subjected to dust removing by the first cyclone separator 2-3 and then transmitted to the tail gas treatment system; and nitrogen gas from other two pipelines originating from the purified nitrogen gas main pipe enters the vanadium-containing material feeder 3-1 and the reduction fluidized bed discharger 3-4, respectively;
wherein compressed air and fuel enter a compressed air inlet and the fuel inlet of the reduction fluidized bed preheater 3-5, respectively;
wherein process water from the process water main pipe flows into a water inlet of the low-valence vanadium oxide secondary cooling device 5 and flows out of a water outlet of the low-valence vanadium oxide secondary cooling device 5, and then enters the water cooling system.

The first characteristic of the present invention lies in that: the reduction fluidized bed body 3-2 is in the form of a rectangular multi-bin double outlet structure, and the fluidized bed has a built-in vertical baffle, each feed outlet is provided with a plug-in valve, and two feed outlets at high and low positions are respectively connected with the feed inlet of the reduction fluidized bed discharger 3-4 through pipelines.

The second characteristic of the present invention lies in that: the vanadium-containing material is one or more of vanadium pentoxide, ammonium metavanadate and ammonium polyvanadate.

The third characteristic of the present invention lies in that: the reducing gas introduced into the reducing gas purifier 3-6 is a mixture of one or two selected from hydrogen gas, ammonia gas, electric furnace gas, converter gas, blast furnace gas, coke oven gas and gas producer gas.

The fourth characteristic of the present invention lies in that: by controlling the operation temperature, the average residence time of the powder, and the reducing atmosphere in the reduction fluidized bed, the average vanadium valence of the low-valence vanadium oxide in the reduction product can be any value in the range of 3.0-4.5;
wherein the operation temperature in the reduction fluidized bed is 400-700 °C, in order to achieve this condition, the corresponding temperature of the reduction fluidized bed preheater 3-5 is controlled to be 450-950 °C;
the average residence time of the powder is 30-60 minutes, wherein when the average vanadium valence of the target low-valence vanadium oxide is 3.0-3.6, a feed outlet at a high position is used for discharging; and when the average vanadium valence of the target low-valence vanadium oxide is 3.6-4.5, a feed outlet at a low position is used for discharging;
the controlling the reducing atmosphere means that the volume fraction of the reducing gas in the mixed gas of nitrogen gas and the reducing gas is 10%-90%.

The fifth characteristic of the present invention lies in that: in the high-activity specific-valence electrolyte of the all-vanadium redox flow battery prepared in the dissolution reactor 7, the average valence of vanadium ions is any value in the range of 3.0-4.5, the concentration of vanadium ions is in the range of 1.0-3.0 mol/L, and the concentration of sulfuric acid is in the range of 3.0-6.0 mol/L; particularly, when the average valence of vanadium ions in the electrolyte is 3.5, the electrolyte can be directly used for a new all-vanadium redox flow battery stack.

The sixth characteristic of the present invention lies in that: in the electrolyte activation device 8, the electrolyte is activated by applying microwave field externally with the activation time of 30-300 minutes, the activation temperature of 20-85 °C, the microwave power density of 10-300 W/L, and the microwave frequency of 2450 MHz or 916 MHz.

The process for preparing an electrolyte in the present invention is of low cost, short process, controllable valence state, high activity, convenient transportation, and simple and quick. The present invention has the following outstanding advantages over the prior art:
(1) Realizing the sensible heat utilization of the high-temperature tail gas and high-temperature reduction product in the fluidized bed: the high-temperature tail gas discharged from the reduction fluidized bed is in direct contact with the cold vanadium-containing material, such that the cold vanadium-containing material is heated while the sensible heat of the high-temperature reduction tail gas is recovered; the purified nitrogen gas for reduction is in direct contact with the discharged high-temperature low-valence vanadium oxide product, such that the purified nitrogen gas is preheated while the reduction product is cooled to recover the sensible heat of the high-temperature reduction product.
(2) Achieving the open circulation of ultrafine powder: the tail gas from the reduction fluidized bed is passed through an external cyclone separator, and the recovered powder enters the reduction fluidized bed discharger, thereby realizing the open circulation of the fine powder particles and avoiding the closed circulation of the fine powder particles.
(3) Adjustable valence state: the fluidized bed structure of rectangular multi-bin double outlet is used to achieve the precise control of reduction, such that a low-valence vanadium oxide having an average vanadium valence of any value in the range of 3.0-4.5 can be prepared, accordingly, an electrolyte having an average vanadium valence of any value in the range of 3.0-4.5 can be prepared; in particular, when the average valence of vanadium ions in the electrolyte is 3.5, the electrolyte can be directly used for the assembly of a new vanadium battery stack.
(4) High activity: the microwave field applied externally is used to activate the electrolyte and promote the dissociation of the oxygen-bridge bond, and the equipment is simple and convenient to implement with good activation effect.
(5) Simple preparation and convenient transportation: the process for producing the electrolyte is short, with simple preparation, and is suitable for on-site configuration of vanadium batteries; in addition, the low-valence vanadium oxide can be transported, thereby greatly reducing the transportation cost.

The present invention has the advantages of strong raw material adaptability, adequate fluidized reduction reaction, no polluted wastewater discharge, low energy consumption in production and low operation cost, stable product quality and so on, and is suitable for the large-scale industrial production of the all-vanadium redox flow battery electrolyte with different valence state requirements and high activity, thereby achieving good economic and social benefits.

### BRIEF DESCRIPTION OF THE DRAWINGS

The accompanying drawing is used to provide further illustration of the present invention and constitutes a part of the specification. It is used to explain the present invention together with the examples of the present invention, rather than limit the present invention.

The system for preparing a high-activity specific-valence electrolyte of an all-vanadium redox flow battery in the present invention comprises a vanadium-containing material feeding device 1, a vanadium-containing material preheating device 2, a reduction fluidized bed device 3, a low-valence vanadium oxide pre-cooling device 4, a low-valence vanadium oxide secondary cooling device 5, a low-valence vanadium oxide feeding device 6, a dissolution reactor 7, and an electrolyte activation device 8.

The vanadium-containing material feeding device 1 comprises a vanadium-containing material hopper 1-1 and a vanadium-containing material screw feeder 1-2.

The vanadium-containing material preheating device 2 comprises a venturi preheater 2-1, a cyclone preheater 2-2 and a first cyclone separator 2-3.

The reduction fluidized bed 3 comprises a vanadium-containing material feeder 3-1, a reduction fluidized bed body 3-2, a reduction fluidized bed cyclone separator 3-3, a reduction fluidized bed discharger 3-4, a reduction fluidized bed preheater 3-5, and a reducing gas purifier 3-6.

The low-valence vanadium oxide pre-cooling device 4 comprises a venturi cooler 4-1, a cyclone cooler 4-2, and a second cyclone separator 4-3.

The low-valence vanadium oxide feeding device 6 comprises a low-valence vanadium oxide hopper 6-1 and a low-valence vanadium oxide screw feeder 6-2.

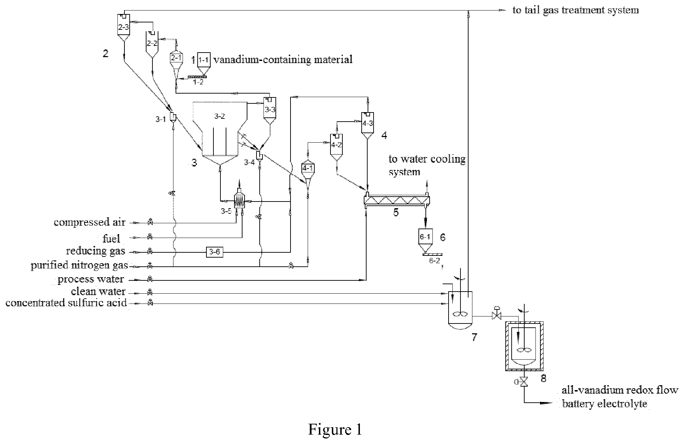

FIG. 1 is a schematic diagram illustrating the configuration of a system for preparing a high-activity specific-valence electrolyte of an all-vanadium redox flow battery according to the present invention.

### Reference signs:

1 Vanadium-containing material feeding device
1-1 Vanadium-containing material hopper
1-2 Vanadium-containing material screw feeder
2 Vanadium-containing material preheating device
2-1 Venturi preheater
2-2 Cyclone preheater
2-3 First cyclone separator
3 Reduction fluidized bed
3-1 Vanadium-containing material feeder
3-2 Reduction fluidized bed body
3-3 Reduction fluidized bed cyclone separator
3-4 Reduction fluidized bed discharger
3-5 Reduction fluidized bed preheater
3-6 Reducing gas purifier
4 Low-valence vanadium oxide pre-cooling device
4-1 Venturi cooler
4-2 Cyclone cooler
4-3 Second cyclone separator
5 Low-valence vanadium oxide secondary cooling device
6 Low-valence vanadium oxide feeding device
6-1 Low-valence vanadium oxide hopper
6-2 Low-valence vanadium oxide screw feeder
7 Dissolution reactor
8 Electrolyte activation device

### DETAILED DESCRIPTION OF THE INVENTION

In order to make the object, technical solution, and advantages of the present invention be clearer, the technical solution in the examples of the present invention will be described clearly and completely below with reference to the accompanying drawing of the present invention. Obviously, the described examples are only a part of the examples of the present invention, not all examples. It is worth noting that the examples are merely used for illustrating the technical solution of the present invention, rather than limiting the present invention.

### Example 1

Referring to FIG. 1, the system for preparing a high-activity specific-valence electrolyte of an all-vanadium redox flow battery used in this example comprises a vanadium-containing material feeding device 1, a vanadium-containing material preheating device 2, a reduction fluidized bed device 3, a low-valence vanadium oxide pre-cooling device 4, a low-valence vanadium oxide secondary cooling device 5, a low-valence vanadium oxide feeding device 6, a dissolution reactor 7, and an electrolyte activation device 8.

The vanadium-containing material feeding device 1 comprises a vanadium-containing material hopper 1-1 and a vanadium-containing material screw feeder 1-2.

The vanadium-containing material preheating device 2 comprises a venturi preheater 2-1, a cyclone preheater 2-2 and a first cyclone separator 2-3.

The reduction fluidized bed 3 comprises a vanadium-containing material feeder 3-1, a reduction fluidized bed body 3-2, a reduction fluidized bed cyclone separator 3-3, a reduction fluidized bed discharger 3-4, a reduction fluidized bed preheater 3-5, and a reducing gas purifier 3-6.

The low-valence vanadium oxide pre-cooling device 4 comprises a venturi cooler 4-1, a cyclone cooler 4-2, and a second cyclone separator 4-3.

The low-valence vanadium oxide feeding device 6 comprises a low-valence vanadium oxide hopper 6-1 and a low-valence vanadium oxide screw feeder 6-2.

A feed outlet at the bottom of the vanadium-containing material hopper 1-1 is connected with a feed inlet of the vanadium-containing material screw feeder 1-2; and a feed outlet of the vanadium-containing material screw feeder 1-2 is connected with a feed inlet of the venturi preheater 2-1 through a pipeline.

A gas inlet of the venturi preheater 2-1 is connected with a gas outlet of the reduction fluidized bed cyclone separator 3-3 through a pipeline; a feed outlet of the venturi preheater 2-1 is connected with a feed inlet of the cyclone preheater 2-2 through a pipeline; a feed outlet of the cyclone preheater 2-2 is connected with a feed inlet of the vanadium-containing material feeder 3-1 through a pipeline; a gas outlet of the cyclone preheater 2-2 is connected with a gas inlet of the first cyclone separator 2-3 through a pipeline; a gas outlet of the first cyclone separator 2-3 is connected with a tail gas treatment system through a pipeline; and a feed outlet of the first cyclone separator 2-3 is connected with the feed inlet of the vanadium-containing material feeder 3-1 through a pipeline.

A feed outlet of the vanadium-containing material feeder 3-1 is connected with a feed inlet of the reduction fluidized bed 3-2 through a pipeline; an aeration air inlet of the vanadium-containing material feeder 3-1 is connected with a nitrogen gas main pipe through a pipeline; a gas outlet of the reduction fluidized bed 3-2 is connected with a gas inlet of the reduction fluidized bed cyclone separator 3-3 through a pipeline; a feed outlet of the reduction fluidized bed cyclone separator 3-3 is connected with a feed inlet of the reduction fluidized bed discharger 3-4 through a pipeline; a feed outlet of the reduction fluidized bed 3-2 is connected with the feed inlet of the reduction fluidized bed discharger 3-4 through a pipeline; a feed outlet of the reduction fluidized bed discharger 3-4 is connected with a feed inlet of the venturi cooler 4-1 through a pipeline; an aeration air inlet of the reduction fluidized bed discharger 3-4 is connected with a purified nitrogen gas main pipe through a pipeline; a reducing gas inlet of the reduction fluidized bed 3-2 is connected with a gas outlet of the reducing gas preheater 3-5 through a pipeline; a gas inlet of the reducing gas preheater is connected with a gas outlet of the second cyclone separator 4-3 through a pipeline; a gas inlet of the reducing gas preheater is connected with a gas outlet of the reducing gas purifier 3-6 through a pipeline; a gas inlet of the reducing gas purifier 3-6 is connected with a reducing gas main pipe through a pipeline; and an air inlet and a fuel inlet of the reducing gas preheater 3-5 are connected with a compressed air main pipe and a fuel main pipe, respectively.

A gas inlet of the venturi cooler 4-1 is connected with the purified nitrogen gas main pipe through a pipeline; a feed outlet of the venturi cooler 4-1 is connected with a feed inlet of the cyclone cooler 4-2 through a pipeline; a feed outlet of the cyclone cooler 4-2 is connected with a feed inlet of the low-valence vanadium oxide secondary cooling system 5 through a pipeline; a gas outlet of the cyclone cooler 4-2 is connected with a gas inlet of the second cyclone separator 4-3 through a pipeline; and a feed outlet of the second cyclone separator 4-3 is connected with a feed inlet of the low-valence vanadium oxide secondary cooling device 5 through a pipeline.

A feed outlet of the low-valence vanadium oxide secondary cooling device 5 is connected with a feed inlet of the low-valence vanadium oxide hopper 6-1 through a pipeline; a cooling water inlet of the low-valence vanadium oxide secondary cooling device 5 is connected with a process water main pipe through a pipeline; and a cooling water outlet of the low-valence vanadium oxide secondary cooling device 5 is connected with a water cooling system through a pipeline.

A feed outlet at the bottom of the low-valence vanadium oxide hopper 6-1 is connected with a feed inlet of the low-valence vanadium oxide screw feeder 6-2; and a feed outlet of the low-valence vanadium oxide screw feeder 6-2 is connected with a feed inlet of the dissolution reactor 7 through a pipeline.

A clean water inlet of the dissolution reactor 7 is connected with a clean water main pipe through a pipeline; a concentrated sulfuric acid inlet of the dissolution reactor 7 is connected with a concentrated sulfuric acid main pipe through a pipeline; a gas outlet of the dissolution reactor 7 is connected with a gas inlet of the tail gas treatment system through a pipeline; and an electrolyte outlet of the dissolution reactor 7 is connected with an electrolyte inlet of the electrolyte activation device 8 through a pipeline.

### Example 2

The system described in Example 1 is used to prepare a high-activity specific-valence electrolyte of an all-vanadium redox flow battery. The method comprises the following steps.

Vanadium-containing material from the vanadium-containing material hopper 1-1 enters the venturi preheater 2-1, the cyclone preheater 2-2 and the first cyclone separator 2-3 in turn through the vanadium-containing material screw feeder 1-2, and then enters the reduction fluidized bed body 3-2 through the vanadium-containing material feeder 3-1. The powder entrained in the high-temperature tail gas discharged from the reduction fluidized bed body 3-2 is collected by the reduction fluidized bed cyclone separator 3-3 and then enters the feed inlet of the reduction fluidized bed discharger 3-4. The reduced low-valence vanadium oxide is discharged from a feed outlet of the reduction fluidized bed body 3-2, and enters the venturi cooler 4-1 and the cyclone cooler 4-2 in turn through the reduction fluidized bed discharger 3-4, and enters the low-valence vanadium oxide secondary cooling device 5 and the low-valence vanadium oxide hopper 6-1 together with the powder material recovered by the second cyclone separator 4-3. The material enters the dissolution reactor 7 through the low-valence vanadium oxide screw feeder 6-2, and is subjected to dissolution reaction together with clean water from the clean water main pipe and concentrated sulfuric acid from the concentrated sulfuric acid main pipe to obtain a primary electrolyte. The primary electrolyte in the dissolution reactor 7 enters the electrolyte activation device 8 through a pipeline with a valve, and is activated to obtain the high-activity specific-valence electrolyte of an all-vanadium redox flow battery.

Purified nitrogen gas enters the venturi cooler 4-1, the cyclone cooler 4-2 and the second cyclone separator 4-3 in turn, and is mixed with the reducing gas purified by the reducing gas purifier 3-6 and preheated by the reduction fluidized bed preheater 3-5, and then enters the reduction fluidized bed body 3-2, such that the vanadium-containing material powder is kept at a fluidized state and reduced. The high-temperature tail gas after reduction enters the reduction fluidized bed cyclone separator 3-3, the venturi preheater 2-1 and the cyclone preheater 2-2 in turn, and finally is subjected to dust removing by the first cyclone separator 2-3 and then transmitted to the tail gas treatment system. Nitrogen gas from other two pipelines originating from the purified nitrogen gas main pipe enters the vanadium-containing material feeder 3-1 and the reduction fluidized bed discharger 3-4, respectively.

Compressed air and fuel enter a compressed air inlet and the fuel inlet of the reduction fluidized bed preheater 3-5, respectively.

Process water from the process water main pipe flows into a water inlet of the low-valence vanadium oxide secondary cooling device 5 and flows out of a water outlet of the low-valence vanadium oxide secondary cooling device 5, and then enters the water cooling system.

### Example 3

In this example, ammonium polyvanadate was used as a raw material, and the throughput was 300 kg/h. The reducing gas introduced into the reduction fluidized bed body 3-2 was coal gas from a gas producer, the volume fraction of coal gas in the mixed gas of the nitrogen gas and coal gas introduced into the reduction fluidized bed body 3-2 was 90%, the average residence time of the powder was 60 min, the low-valence vanadium oxide was discharged from the feed outlet at a high position, and the operation temperature in the reduction fluidized bed was 700 °C, and a low-valence vanadium oxide having an average vanadium valence of 3.0 was obtained. Concentrated sulfuric acid and clean water were added to the dissolution reactor 7 to obtain a primary electrolyte. In the activation device 8, the primary electrolyte was activated for 300 minutes at a temperature of 20 °C, with a microwave power density of 10 W/L and a microwave frequency of 916 MHz, to obtain a high-activity specific-valence electrolyte of an all-vanadium redox flow battery with the average vanadium ion valence of 3.0, the concentration of vanadium ions of 1.5 mol/L and the concentration of sulfate of 5.0 mol/L.

### Example 4

In this example, ammonium metavanadate was used as a raw material, and the throughput was 30 kg/h. The reducing gas introduced into the reduction fluidized bed body 3-2 was blast furnace gas, the volume fraction of coal gas in the mixed gas of the nitrogen gas and coal gas introduced into the reduction fluidized bed body 3-2 was 10%, the average residence time of the powder was 60 min, the low-valence vanadium oxide was discharged from the feed outlet at a low position, and the operation temperature in the reduction fluidized bed was 400 °C, and a low-valence vanadium oxide having an average vanadium valence of 4.5 was obtained. Concentrated sulfuric acid and clean water were added to the dissolution reactor 7 to obtain a primary electrolyte. In the activation device 8, the primary electrolyte was activated for 10 minutes at a temperature of 85 °C, with a microwave power density of 300 W/L and a microwave frequency of 2450 MHz, to obtain a high-activity specific-valence electrolyte of an all-vanadium redox flow battery with the average vanadium ion valence of 4.5, the concentration of vanadium ions of 1.5 mol/L and the concentration of sulfate of 5.0 mol/L.

### Example 5

In this example, vanadium pentoxide (with a purity of above 99.996%) was used as a raw material, and the throughput was 100 kg/h. The reducing gas introduced into the reduction fluidized bed body 3-2 was hydrogen gas, the volume fraction of hydrogen gas in the mixed gas of the nitrogen gas and hydrogen gas introduced into the reduction fluidized bed body 3-2 was 50%, the average residence time of the powder was 45 min, the low-valence vanadium oxide was discharged from the feed outlet at a high position, and the operation temperature in the reduction fluidized bed was 500 °C, and a low-valence vanadium oxide having an average vanadium valence of 3.5 was obtained. Concentrated sulfuric acid and clean water were added to the dissolution reactor 7 to obtain a primary electrolyte. In the activation device 8, the primary electrolyte was activated for 120 minutes at a temperature of 40 °C, with a microwave power density of 200 W/L and a microwave frequency of 916 MHz, to obtain a high-activity specific-valence electrolyte of an all-vanadium redox flow battery with the average vanadium ion valence of 3.5, the concentration of vanadium ions of 1.7 mol/L and the concentration of sulfate of 5.0 mol/L, which can be directly used for the preparation of the electrolyte of a new all-vanadium redox flow battery stack.

### Example 6

In this example, vanadium pentoxide (with a purity of above 99.996%) was used as a raw material, and the throughput was 100 kg/h. The reducing gas introduced into the reduction fluidized bed body 3-2 was hydrogen gas, the volume fraction of ammonia gas in the mixed gas of the nitrogen gas and ammonia gas introduced into the reduction fluidized bed body 3-2 was 60%, the average residence time of the powder was 30 min, the low-valence vanadium oxide was discharged from the feed outlet at a high position, and the operation temperature in the reduction fluidized bed was 600 °C, and a low-valence vanadium oxide having an average vanadium valence of 3.6 was obtained. Concentrated sulfuric acid and clean water were added to the dissolution reactor 7 to obtain a primary electrolyte. In the activation device 8, the primary electrolyte was activated for 200 minutes at a temperature of 50 °C, with a microwave power density of 200 W/L and a microwave frequency of 916 MHz, to obtain a high-activity specific-valence electrolyte of an all-vanadium redox flow battery with the average vanadium ion valence of 3.6, the concentration of vanadium ions of 1.7 mol/L and the concentration of sulfate of 5.0 mol/L, which can be directly used for the preparation of the electrolyte of a new all-vanadium redox flow battery stack.

The contents which are not illustrated in detail in the present invention belong to the well-known technologies in the art.

## Claims

1. A system for preparing a high-activity specific-valence electrolyte of an all-vanadium redox flow battery, comprising a vanadium-containing material feeding device (1), a vanadium-containing material preheating device (2), a reduction fluidized bed device (3), a low-valence vanadium oxide pre-cooling device (4), a low-valence vanadium oxide secondary cooling device (5), a low-valence vanadium oxide feeding device (6), a dissolution reactor (7), and an electrolyte activation device (8);
wherein the vanadium-containing material feeding device (1) comprises a vanadium-containing material hopper (1-1) and a vanadium-containing material screw feeder (1-2);
the vanadium-containing material preheating device (2) comprises a venturi preheater (2-1), a cyclone preheater (2-2) and a first cyclone separator (2-3);
the reduction fluidized bed (3) comprises a vanadium-containing material feeder (3-1), a reduction fluidized bed body (3-2), a reduction fluidized bed cyclone separator (3-3), a reduction fluidized bed discharger (3-4), a reduction fluidized bed preheater (3-5), and a reducing gas purifier (3-6);
the low-valence vanadium oxide pre-cooling device (4) comprises a venturi cooler (4-1), a cyclone cooler (4-2), and a second cyclone separator (4-3);
the low-valence vanadium oxide feeding device (6) comprises a low-valence vanadium oxide hopper (6-1) and a low-valence vanadium oxide screw feeder (6-2);
wherein a feed outlet at the bottom of the vanadium-containing material hopper (1-1) is connected with a feed inlet of the vanadium-containing material screw feeder (1-2); and a feed outlet of the vanadium-containing material screw feeder (1-2) is connected with a feed inlet of the venturi preheater (2-1) through a pipeline;
a gas inlet of the venturi preheater (2-1) is connected with a gas outlet of the reduction fluidized bed cyclone separator (3-3) through a pipeline; a feed outlet of the venturi preheater (2-1) is connected with a feed inlet of the cyclone preheater (2-2) through a pipeline; a feed outlet of the cyclone preheater (2-2) is connected with a feed inlet of the vanadium-containing material feeder (3-1) through a pipeline; a gas outlet of the cyclone preheater (2-2) is connected with a gas inlet of the first cyclone separator (2-3) through a pipeline; a gas outlet of the first cyclone separator (2-3) is connected with a tail gas treatment system through a pipeline; and a feed outlet of the first cyclone separator (2-3) is connected with the feed inlet of the vanadium-containing material feeder (3-1) through a pipeline;
a feed outlet of the vanadium-containing material feeder (3-1) is connected with a feed inlet of the reduction fluidized bed body(3-2) through a pipeline; an aeration air inlet of the vanadium-containing material feeder (3-1) is connected with a nitrogen gas main pipe through a pipeline; a gas outlet of the reduction fluidized bed body(3-2) is connected with a gas inlet of the reduction fluidized bed cyclone separator (3-3) through a pipeline; a feed outlet of the reduction fluidized bed cyclone separator (3-3) is connected with a feed inlet of the reduction fluidized bed discharger (3-4) through a pipeline; a feed outlet of the reduction fluidized bed body(3-2) is connected with the feed inlet of the reduction fluidized bed discharger (3-4) through a pipeline; a feed outlet of the reduction fluidized bed discharger (3-4) is connected with a feed inlet of the venturi cooler (4-1) through a pipeline; an aeration air inlet of the reduction fluidized bed discharger (3-4) is connected with a purified nitrogen gas main pipe through a pipeline; a reducing gas inlet of the reduction fluidized bed body(3-2) is connected with a gas outlet of the reduction fluidized bed preheater (3-5) through a pipeline; a gas inlet of the reduction fluidized bed preheater (3-5) is connected with a gas outlet of the second cyclone separator (4-3) through a pipeline; a gas inlet of the reduction fluidized bed preheater (3-5) is connected with a gas outlet of the reducing gas purifier (3-6) through a pipeline; a gas inlet of the reducing gas purifier (3-6) is connected with a reducing gas main pipe through a pipeline; and an air inlet and a fuel inlet of the reduction fluidized bed preheater(3-5) are connected with a compressed air main pipe and a fuel main pipe, respectively;
a gas inlet of the venturi cooler (4-1) is connected with the purified nitrogen gas main pipe through a pipeline; a feed outlet of the venturi cooler (4-1) is connected with a feed inlet of the cyclone cooler (4-2) through a pipeline; a feed outlet of the cyclone cooler (4-2) is connected with a feed inlet of the low-valence vanadium oxide secondary cooling device (5) through a pipeline; a gas outlet of the cyclone cooler (4-2) is connected with a gas inlet of the second cyclone separator (4-3) through a pipeline; and a feed outlet of the second cyclone separator (4-3) is connected with a feed inlet of the low-valence vanadium oxide secondary cooling device (5) through a pipeline;
a feed outlet of the low-valence vanadium oxide secondary cooling device (5) is connected with a feed inlet of the low-valence vanadium oxide hopper (6-1) through a pipeline; a cooling water inlet of the low-valence vanadium oxide secondary cooling device (5) is connected with a process water main pipe through a pipeline; and a cooling water outlet of the low-valence vanadium oxide secondary cooling device (5) is connected with a water cooling system through a pipeline;
a feed outlet at the bottom of the low-valence vanadium oxide hopper (6-1) is connected with a feed inlet of the low-valence vanadium oxide screw feeder (6-2); and a feed outlet of the low-valence vanadium oxide screw feeder (6-2) is connected with a feed inlet of the dissolution reactor (7) through a pipeline;
a clean water inlet of the dissolution reactor (7) is connected with a clean water main pipe through a pipeline; a concentrated sulfuric acid inlet of the dissolution reactor (7) is connected with a concentrated sulfuric acid main pipe through a pipeline; a gas outlet of the dissolution reactor (7) is connected with a gas inlet of the tail gas treatment system through a pipeline; and an electrolyte outlet of the dissolution reactor (7) is connected with an electrolyte inlet of the electrolyte activation device (8) through a pipeline.

2. The system for preparing a high-activity specific-valence electrolyte of an all-vanadium redox flow battery according to claim 1, wherein the reduction fluidized bed body (3-2) is in the form of a rectangular multi-bin double outlet structure, and the fluidized bed has a built-in vertical baffle, each feed outlet is provided with a plug-in valve, and two feed outlets at high and low positions are respectively connected with the feed inlet of the reduction fluidized bed discharger (3-4) through pipelines.

3. A method for preparing a high-activity specific-valence electrolyte of an all-vanadium redox flow battery based on the system of claim 1, comprising the following steps:
allowing vanadium-containing material from the vanadium-containing material hopper (1-1) to enter the venturi preheater (2-1), the cyclone preheater (2-2) and the first cyclone separator (2-3) in turn through the vanadium-containing material screw feeder (1-2), and then enter the reduction fluidized bed body (3-2) through the vanadium-containing material feeder (3-1); allowing the powder entrained in the high-temperature tail gas discharged from the reduction fluidized bed body (3-2) to be collected by the reduction fluidized bed cyclone separator (3-3) and then enter the feed inlet of the reduction fluidized bed discharger (3-4); making the reduced low-valence vanadium oxide be discharged from a feed outlet of the reduction fluidized bed body (3-2), and enter the venturi cooler (4-1) and the cyclone cooler (4-2) in turn through the reduction fluidized bed discharger (3-4), and enter the low-valence vanadium oxide secondary cooling device (5) and the low-valence vanadium oxide hopper (6-1) together with the powder material recovered by the second cyclone separator (4-3); allowing the material to enter the dissolution reactor (7) through the low-valence vanadium oxide screw feeder (6-2), and be subjected to dissolution reaction together with clean water from the clean water main pipe and concentrated sulfuric acid from the concentrated sulfuric acid main pipe to obtain a primary electrolyte; and allowing the primary electrolyte in the dissolution reactor (7) to enter the electrolyte activation device (8) through a pipeline with a valve, and be activated to obtain the high-activity specific-valence electrolyte of an all-vanadium redox flow battery;
wherein purified nitrogen gas enters the venturi cooler (4-1), the cyclone cooler (4-2) and the second cyclone separator (4-3) in turn, and is mixed with the reducing gas purified by the reducing gas purifier (3-6) and preheated by the reduction fluidized bed preheater (3-5), and then enters the reduction fluidized bed body (3-2), such that the vanadium-containing material powder is kept at a fluidized state and reduced; the high-temperature tail gas after reduction enters the reduction fluidized bed cyclone separator (3-3), the venturi preheater (2-1) and the cyclone preheater (2-2) in turn, and finally is subjected to dust removing by the first cyclone separator (2-3) and then transmitted to the tail gas treatment system; and nitrogen gas from other two pipelines originating from the purified nitrogen gas main pipe enters the vanadium-containing material feeder (3-1) and the reduction fluidized bed discharger (3-4), respectively;
wherein compressed air and fuel enter a compressed air inlet and the fuel inlet of the reduction fluidized bed preheater (3-5), respectively;
wherein process water from the process water main pipe flows into a water inlet of the low-valence vanadium oxide secondary cooling device (5) and flows out of a water outlet of the low-valence vanadium oxide secondary cooling device (5), and then enters the water cooling system.

4. The method for preparing a high-activity specific-valence electrolyte of an all-vanadium redox flow battery according to claim 3, wherein the vanadium-containing material is one or more of vanadium pentoxide, ammonium metavanadate and ammonium polyvanadate.

5. The method for preparing a high-activity specific-valence electrolyte of an all-vanadium redox flow battery according to claim 3, wherein the reducing gas introduced into the reducing gas purifier (3-6) is a mixture of one or two selected from hydrogen gas, ammonia gas, electric furnace gas, converter gas, blast furnace gas, coke oven gas and gas producer gas.

6. The method for preparing a high-activity specific-valence electrolyte of an all-vanadium redox flow battery according to claim 3, wherein by controlling the operation temperature, the average residence time of the powder, and the reducing atmosphere in the reduction fluidized bed, the average vanadium valence of the low-valence vanadium oxide in the reduction product can be any value in the range of 3.0-4.5;
wherein the operation temperature in the reduction fluidized bed is 400-700 °C, in order to achieve this condition, the corresponding temperature of the reduction fluidized bed preheater (3-5) is controlled to be 450-950 °C;
the average residence time of the powder is 30-60 minutes, wherein when the average vanadium valence of the target low-valence vanadium oxide is 3.0-3.6, a feed outlet at a high position is used for discharging; and when the average vanadium valence of the target low-valence vanadium oxide is 3.6-4.5, a feed outlet at a low position is used for discharging;
the controlling the reducing atmosphere means that the volume fraction of the reducing gas in the mixed gas of nitrogen gas and the reducing gas is 10%-90%.

7. The method for preparing a high-activity specific-valence electrolyte of an all-vanadium redox flow battery according to claim 3, wherein in the high-activity specific-valence electrolyte of the all-vanadium redox flow battery prepared in the dissolution reactor (7), the average valence of vanadium ions is any value in the range of 3.0-4.5, the concentration of vanadium ions is in the range of 1.0-3.0 mol/L, and the concentration of sulfuric acid is in the range of 3.0-6.0 mol/L.

8. The method for preparing a high-activity specific-valence electrolyte of an all-vanadium redox flow battery according to claim 7, wherein when the average valence of vanadium ions in the electrolyte is 3.5, the electrolyte is directly used for a new all-vanadium redox flow battery stack.

9. The method for preparing a high-activity specific-valence electrolyte of an all-vanadium redox flow battery according to claim 3, wherein in the electrolyte activation device (8), the electrolyte is activated by applying microwave field externally with the activation time of 30-300 minutes, the activation temperature of 20-85 °C, the microwave power density of 10-300 W/L, and the microwave frequency of 2450 MHz or 916 MHz.

## Patentansprüche

1. System zur Herstellung eines Elektrolyts mit hoher Aktivität und spezifischer Wertigkeit einer All-Vanadium-Redox-Flow-Batterie, umfassend eine Vorrichtung (1) zur Zuführung von vanadiumhaltigem Material, eine Vorrichtung (2) zur Vorwärmung von vanadiumhaltigem Material, eine Reduktionswirbelbettvorrichtung (3), eine Vorrichtung (4) zur Vorkühlung von Vanadiumoxid mit niedriger Wertigkeit, eine sekundäre Vorrichtung (5) zur Kühlung von Vanadiumoxid mit niedriger Wertigkeit, eine Vorrichtung (6) zur Zuführung von Vanadiumoxid mit niedriger Wertigkeit, einen Lösungsreaktor (7) und eine Elektrolytaktivierungsvorrichtung (8);
wobei die Vorrichtung (1) zur Zuführung von vanadiumhaltigem Material einen Trichter (1-1) für vanadiumhaltiges Material und einen Schneckenförderer (1-2) für vanadiumhaltiges Material umfasst;
die Vorrichtung (2) zur Vorwärmung von vanadiumhaltigem Material einen Venturivorwärmer (2-1), einen Zyklonvorwärmer (2-2) und einen ersten Zyklonabscheider (2-3) umfasst;
das Reduktionswirbelbett (3) eine Zuführvorrichtung (3-1) für vanadiumhaltiges Material, ein Reduktionswirbelbettgehäuse (3-2), einen Reduktionswirbelbett-Zyklonabscheider (3-3), eine Reduktionswirbelbett-Austragvorrichtung (3-4), einen Reduktionswirbelbett-Vorwärmer (3-5) und einen Reduktionsgasreiniger (3-6) umfasst;
die Vorrichtung (4) zur Vorkühlung von Vanadiumoxid mit niedriger Wertigkeit einen Venturikühler (4-1), einen Zyklonkühler (4-2) und einen zweiten Zyklonabscheider (4-3) umfasst;
die Vorrichtung (6) zur Zuführung von Vanadiumoxid mit niedriger Wertigkeit einen Trichter (6-1) für Vanadiumoxid mit niedriger Wertigkeit und einen Schneckenförderer (6-2) für Vanadiumoxid mit niedriger Wertigkeit umfasst;
wobei ein Zufuhrauslass am Boden des Trichters (1-1) für vanadiumhaltiges Material mit einem Zufuhreinlass des Schneckenförderers (1-2) für vanadiumhaltiges Material verbunden ist und ein Zufuhrauslass des Schneckenförderers (1-2) für vanadiumhaltiges Material durch eine Rohrleitung mit einem Zufuhreinlass des Venturivorwärmers (2-1) verbunden ist;
ein Gaseinlass des Venturivorwärmers (2-1) durch eine Rohrleitung mit einem Gasauslass des Reduktionswirbelbett-Zyklonabscheiders (3-3) verbunden ist; ein Zufuhrauslass des Venturivorwärmers (2-1) durch eine Rohrleitung mit einem Zufuhreinlass des Zyklonvorwärmers (2-2) verbunden ist; ein Zufuhrauslass des Zyklonvorwärmers (2-2) durch eine Rohrleitung mit einem Zufuhreinlass der Zuführvorrichtung (3-1) für vanadiumhaltiges Material verbunden ist; ein Gasauslass des Zyklonvorwärmers (2-2) durch eine Rohrleitung mit einem Gaseinlass des ersten Zyklonabscheiders (2-3) verbunden ist; ein Gasauslass des ersten Zyklonabscheiders (2-3) durch eine Rohrleitung mit einem Restgasaufbereitungssystem verbunden ist und ein Zufuhrauslass des ersten Zyklonabscheiders (2-3) durch eine Rohrleitung mit dem Zufuhreinlass der Zuführvorrichtung (3-1) für vanadiumhaltiges Material verbunden ist;
ein Zufuhrauslass der Zuführvorrichtung (3-1) für vanadiumhaltiges Material durch eine Rohrleitung mit einem Zufuhreinlass des Reduktionswirbelbettgehäuses (3-2) verbunden ist; ein Belüftungslufteinlass der Zuführvorrichtung (3-1) für vanadiumhaltiges Material durch eine Rohrleitung mit einem Stickstoffgashauptrohr verbunden ist; ein Gasauslass des Reduktionswirbelbettgehäuses (3-2) durch eine Rohrleitung mit einem Gaseinlass des Reduktionswirbelbett-Zyklonabscheiders (3-3) verbunden ist; ein Zufuhrauslass des Reduktionswirbelbett-Zyklonabscheiders (3-3) durch eine Rohrleitung mit einem Zufuhreinlass der Reduktionswirbelbett-Austragvorrichtung (3-4) verbunden ist; ein Zufuhrauslass des Reduktionswirbelbettgehäuses (3-2) durch eine Rohrleitung mit dem Zufuhreinlass der Reduktionswirbelbett-Austragvorrichtung (3-4) verbunden ist; ein Zufuhrauslass der Reduktionswirbelbett-Austragvorrichtung (3-4) durch eine Rohrleitung mit einem Zufuhreinlass des Venturikühlers (4-1) verbunden ist; ein Belüftungslufteinlass der Reduktionswirbelbett-Austragvorrichtung (3-4) durch eine Rohrleitung mit einem Hauptrohr für gereinigtes Stickstoffgas verbunden ist; ein Reduktionsgaseinlass des Reduktionswirbelbettgehäuses (3-2) durch eine Rohrleitung mit einem Gasauslass des Reduktionswirbelbett-Vorwärmers (3-5) verbunden ist; ein Gaseinlass des Reduktionswirbelbett-Vorwärmers (3-5) durch eine Rohrleitung mit einem Gasauslass des zweiten Zyklonabscheiders (4-3) verbunden ist; ein Gaseinlass des Reduktionswirbelbett-Vorwärmers (3-5) durch eine Rohrleitung mit einem Gasauslass des Reduktionsgasreinigers (3-6) verbunden ist; ein Gaseinlass des Reduktionsgasreinigers (3-6) durch eine Rohrleitung mit einem Reduktionsgashauptrohr verbunden ist und ein Lufteinlass und ein Treibstoffeinlass des Reduktionswirbelbett-Vorwärmers (3-5) mit einem Druckgashauptrohr bzw. einem Treibstoffrohr verbunden sind;
ein Gaseinlass des Venturikühlers (4-1) durch eine Rohrleitung mit dem Hauptrohr für gereinigtes Stickstoffgas verbunden ist; ein Zufuhrauslass des Venturikühlers (4-1) durch eine Rohrleitung mit einem Zufuhreinlass des Zyklonkühlers (4-2) verbunden ist; ein Zufuhrauslass des Zyklonkühlers (4-2) durch eine Rohrleitung mit einem Zufuhreinlass der sekundären Vorrichtung (5) zur Kühlung von Vanadiumoxid mit niedriger Wertigkeit verbunden ist; ein Gasauslass des Zyklonkühlers (4-2) durch eine Rohrleitung mit einem Gaseinlass des zweiten Zyklonabscheiders (4-3) verbunden ist und ein Zufuhrauslass des zweiten Zyklonabscheiders (4-3) durch eine Rohrleitung mit einem Zufuhreinlass der sekundären Vorrichtung (5) zur Kühlung von Vanadiumoxid mit niedriger Wertigkeit verbunden ist;
ein Zufuhrauslass der sekundären Vorrichtung (5) zur Kühlung von Vanadiumoxid durch eine Rohrleitung mit einem Zufuhreinlass des Trichters (6-1) für Vanadiumoxid mit niedriger Wertigkeit verbunden ist; ein Kühlwassereinlass der sekundären Vorrichtung (5) zur Kühlung von Vanadiumoxid durch eine Rohrleitung mit einem Prozesswasserhauptrohr verbunden ist und ein Kühlwasserauslass der sekundären Vorrichtung (5) zur Kühlung von Vanadiumoxid durch eine Rohrleitung mit einem Wasserkühlsystem verbunden ist;
ein Zufuhrauslass am Boden des Trichters (6-1) für Vanadiumoxid mit niedriger Wertigkeit mit einem Zufuhreinlass des Schneckenförderers (6-2) für Vanadiumoxid mit niedriger Wertigkeit verbunden ist und ein Zufuhrauslass des Schneckenförderers (6-2) für Vanadiumoxid mit niedriger Wertigkeit durch eine Rohrleitung mit einem Zufuhreinlass des Lösungsreaktors (7) verbunden ist;
ein Einlass für reines Wasser des Lösungsreaktors (7) durch eine Rohrleitung mit einem Hauptrohr für reines Wasser verbunden ist; ein Einlass für konzentrierte Schwefelsäure des Lösungsreaktors (7) durch eine Rohrleitung mit einem Hauptrohr für konzentrierte Schwefelsäure verbunden ist; ein Gasauslass des Lösungsreaktors (7) durch eine Rohrleitung mit einem Gaseinlass des Restgasaufbereitungssystems verbunden ist und ein Elektrolytauslass des Lösungsreaktors (7) durch eine Rohrleitung mit einem Elektrolyteinlass der Elektrolytaktivierungsvorrichtung (8) verbunden ist.

2. System zur Herstellung eines Elektrolyts mit hoher Aktivität und spezifischer Wertigkeit einer All-Vanadium-Redox-Flow-Batterie nach Anspruch 1, wobei das Reduktionswirbelbettgehäuse (3-2) in der Form einer rechteckigen Mehrbehälter-Doppelauslass-Struktur ist und das Wirbelbett eine eingebaute vertikale Trennwand aufweist, wobei jeder Zufuhrauslass mit einem Steckventil versehen ist und zwei Zufuhrauslässe in einer hohen und einer niedrigen Position jeweils durch Rohrleitungen mit dem Zufuhreinlass der Reduktionswirbelbett-Austragvorrichtung (3-4) verbunden sind.

3. Verfahren zur Herstellung eines Elektrolyts mit hoher Aktivität und spezifischer Wertigkeit einer All-Vanadium-Redox-Flow-Batterie auf der Basis des Systems nach Anspruch 1, umfassend die folgenden Schritte:
Gelangenlassen von vanadiumhaltigen Material aus dem Trichter (1-1) für vanadiumhaltiges Material der Reihe nach in den Venturivorwärmer (2-1), den Zyklonvorwärmer (2-2) und den ersten Zyklonabscheider (2-3) durch den Schneckenförderer (1-2) für vanadiumhaltiges Material und dann in das Reduktionswirbelbettgehäuse (3-2) durch die Zuführvorrichtung (3-1) für vanadiumhaltiges Material; Zulassen, dass das Pulver, das in dem Hochtemperaturrestgas mitgeführt wird, das aus dem Reduktionswirbelbettgehäuse (3-2) abgeleitet wird, durch den Reduktionswirbelbett-Zyklonabscheider (3-3) gesammelt wird und dann Gelangenlassen dieses in den Zufuhreinlass der Reduktionswirbelbett-Austragvorrichtung (3-4); Bewirken, dass das reduzierte Vanadiumoxid mit niedriger Wertigkeit aus einem Zufuhrauslass des Reduktionswirbelbettgehäuses (3-2) abgeleitet wird und der Reihe nach in den Venturikühler (4-1) und den Zyklonkühler (4-2) durch die Reduktionswirbelbett-Austragvorrichtung (3-4) gelangt und zusammen mit dem Pulvermaterial, das durch den zweiten Zyklonabscheider (4-3) gewonnen wurde, in die sekundäre Vorrichtung (5) zur Kühlung von Vanadiumoxid mit niedriger Wertigkeit und den Trichter (6-1) für Vanadiumoxid mit niedriger Wertigkeit gelangt; Gelangenlassen des Materials in den Lösungsreaktor (7) durch den Schneckenförderer (6-2) für Vanadiumoxid mit niedriger Wertigkeit und Zulassen, dass es zusammen mit reinem Wasser aus dem Hauptrohr für reines Wasser und konzentrierter Schwefelsäure aus dem Hauptrohr für konzentrierte Schwefelsäure einer Lösungsreaktion unterzogen wird, um einen primären Elektrolyt zu erhalten; und Gelangenlassen des primären Elektrolyts in dem Lösungsreaktor (7) in die Elektrolytaktivierungsvorrichtung (8) durch eine Rohrleitung mit einem Ventil und Zulassen, dass er aktiviert wird, um den Elektrolyt mit hoher Aktivität und spezifischer Wertigkeit einer All-Vanadium-Redox-Flow-Batterie zu erhalten;
wobei gereinigtes Stickstoffgas der Reihe nach in den Venturikühler (4-1), den Zyklonkühler (4-2) und den zweiten Zyklonabscheider (4-3) gelangt und mit dem Reduktionsgas, das durch den Reduktionsgasreiniger (3-6) gereinigt und durch den Reduktionswirbelbett-Vorwärmer (3-5) vorgewärmt wurde, gemischt wird und dann in das Reduktionswirbelbettgehäuse (3-2) gelangt, so dass das vanadiumhaltige Materialpulver in einem gewirbelten Zustand gehalten und reduziert wird; das Hochtemperaturrestgas nach der Reduktion der Reihe nach in den Reduktionswirbelbett-Zyklonabscheider (3-3), den Venturivorwärmer (2-1) und den Zyklonvorwärmer (2-2) gelangt und schließlich einer Staubentfernung durch den ersten Zyklonabscheider (2-3) unterzogen wird und dann in das Restgasaufbereitungssystem übertragen wird; und Stickstoffgas aus anderen zwei Rohrleitungen, die von dem Hauptrohr für gereinigtes Stickstoffgas ausgehen, in die Zuführvorrichtung (3-1) für vanadiumhaltiges Material bzw. die Reduktionswirbelbett-Austragvorrichtung (3-4) gelangt;
wobei Druckluft und Treibstoff in einen Drucklufteinlass bzw. den Treibstoffeinlass des Reduktionswirbelbett-Vorwärmers (3-5) gelangen;
wobei Prozesswasser aus dem Prozesswasserhauptrohr in einen Wassereinlass der sekundären Vorrichtung (5) zur Kühlung von Vanadiumoxid mit niedriger Wertigkeit fließt und aus einem Wasserauslass der sekundären Vorrichtung (5) zur Kühlung von Vanadiumoxid mit niedriger Wertigkeit fließt und dann in das Wasserkühlsystem gelangt.

4. Verfahren zur Herstellung eines Elektrolyts mit hoher Aktivität und spezifischer Wertigkeit einer All-Vanadium-Redox-Flow-Batterie nach Anspruch 3, wobei das vanadiumhaltige Material eines oder mehrere von Vanadiumperoxid, Ammoniummetavanadat und Ammoniumpolyvanadat ist.

5. Verfahren zur Herstellung eines Elektrolyts mit hoher Aktivität und spezifischer Wertigkeit einer All-Vanadium-Redox-Flow-Batterie nach Anspruch 3, wobei das in den Reduktionsgasreiniger (3-6) eingebrachte Reduktionsgas ein Gemisch von einem oder zwei ist, die aus Wasserstoffgas, Ammoniakgas, Elektroofengas, Gichtgas, Hochofengas, Koksofengas und Gasgeneratorgas ausgewählt sind.

6. Verfahren zur Herstellung eines Elektrolyts mit hoher Aktivität und spezifischer Wertigkeit einer All-Vanadium-Redox-Flow-Batterie nach Anspruch 3, wobei durch Steuern der Betriebstemperatur, der durchschnittlichen Verweilzeit des Pulvers und der Reduktionsatmosphäre in dem Reduktionswirbelbett die durchschnittliche Vanadiumwertigkeit des Vanadiumoxids mit niedriger Wertigkeit in dem Reduktionsprodukt einen beliebigen Wert im Bereich von 3,0-4,5 aufweisen kann;
wobei die Betriebstemperatur in dem Reduktionswirbelbett 400-700 °C beträgt, um diese Bedingung zu erzielen, wird die entsprechende Temperatur des Reduktionswirbelbett-Vorwärmers (3-5) so gesteuert, dass sie 450-950 °C ist;
die durchschnittliche Verweilzeit des Pulvers 30-60 Minuten beträgt, wobei, wenn die durchschnittliche Vanadiumwertigkeit des Sollvanadiumoxids mit niedriger Wertigkeit 3,0-3,6 beträgt, ein Zufuhrauslass in einer hohen Position zum Ableiten verwendet wird; und wenn die durchschnittliche Vanadiumwertigkeit des Sollvanadiumoxids mit niedriger Wertigkeit 3,6-4,5 beträgt, ein Zufuhrauslass in einer niedrigen Position zum Ableiten verwendet wird;
das Steuern der Reduktionsatmosphäre bedeutet, dass die Volumenfraktion des Reduktionsgases in dem Mischgas von Stickstoffgas und dem Reduktionsgas 10 % - 90 % beträgt.

7. Verfahren zur Herstellung eines Elektrolyts mit hoher Aktivität und spezifischer Wertigkeit einer All-Vanadium-Redox-Flow-Batterie nach Anspruch 3, wobei in dem Elektrolyt mit hoher Aktivität und spezifischer Wertigkeit einer All-Vanadium-Redox-Flow-Batterie, der in dem Lösungsreaktor (7) hergestellt wird, die durchschnittliche Wertigkeit von Vanadium-Ionen einen beliebigen Wert im Bereich von 3,0-4,5 aufweist, die Konzentration von Vanadium-Ionen im Bereich von 1,0-3,0 mol/L liegt und die Konzentration von Schwefelsäure im Bereich von 3,0-6,0 mol/L liegt.

8. Verfahren zur Herstellung eines Elektrolyts mit hoher Aktivität und spezifischer Wertigkeit einer All-Vanadium-Redox-Flow-Batterie nach Anspruch 7, wobei, wenn die durchschnittliche Wertigkeit von Vanadium-Ionen in dem Elektrolyt 3,5 beträgt, der Elektrolyt direkt für einen neuen All-Vanadium-Redox-Flow-Batterienstapel verwendet wird.

9. Verfahren zur Herstellung eines Elektrolyts mit hoher Aktivität und spezifischer Wertigkeit einer All-Vanadium-Redox-Flow-Batterie nach Anspruch 3, wobei in der Elektrolytaktivierungsvorrichtung (8) der Elektrolyt durch externes Anwenden eines Mikrowellenfelds mit der Aktivierungszeit von 30-300 Minuten, der Aktivierungstemperatur von 20-85 °C, der Mikrowellenleistungsdichte von 10-300 W/L und der Mikrowellenfrequenz von 2450 MHz oder 916 MHz aktiviert wird.

## Revendications

1. Système pour la préparation d'un électrolyte de valence spécifique, à activité élevée, d'une batterie à flux redox tout vanadium, comprenant un dispositif d'alimentation de matière contenant du vanadium (1), un dispositif de préchauffage de matière contenant du vanadium (2), un dispositif de lit fluidisé de réduction (3), un dispositif de pré-refroidissement d'oxyde de vanadium de faible valence (4), un dispositif de refroidissement secondaire d'oxyde de vanadium de faible valence (5), un dispositif d'alimentation d'oxyde de vanadium de faible valence (6), un réacteur de dissolution (7), et un dispositif d'activation d'électrolyte (8) ;
dans lequel le dispositif d'alimentation de matière contenant du vanadium (1) comprend une trémie de matière contenant du vanadium (1-1) et un dispositif d'alimentation à vis de matière contenant du vanadium (1-2) ;
le dispositif de préchauffage de matière contenant du vanadium (2) comprend un dispositif de préchauffage à venturi (2-1), un dispositif de préchauffage à cyclone (2-2) et un premier séparateur à cyclone (2-3) ;
le lit fluidisé de réduction (3) comprend un dispositif d'alimentation de matière contenant du vanadium (3-1), un corps de lit fluidisé de réduction (3-2), un séparateur à cyclone de lit fluidisé de réduction (3-3), un dispositif de décharge de lit fluidisé de réduction (3-4), un dispositif de préchauffage de lit fluidisé de réduction (3-5) et un épurateur de gaz de réduction (3-6) ;
le dispositif de pré-refroidissement d'oxyde de vanadium de faible valence (4) comprend un refroidisseur à venturi (4-1), un refroidisseur à cyclone (4-2) et un second séparateur à cyclone (4-3) ;
le dispositif d'alimentation d'oxyde de vanadium de faible valence (6) comprend une trémie d'oxyde de vanadium de faible valence (6-1) et un dispositif d'alimentation à vis d'oxyde de vanadium de faible valence (6-2) ;
dans lequel une sortie d'alimentation au fond de la trémie de matière contenant du vanadium (1-1) est reliée à une entrée d'alimentation du dispositif d'alimentation à vis de matière contenant du vanadium (1-2) ; et une sortie d'alimentation du dispositif d'alimentation à vis de matière contenant du vanadium (1-2) est reliée à une entrée d'alimentation du dispositif de préchauffage à venturi (2-1) par une conduite ;
une entrée de gaz du dispositif de préchauffage à venturi (2-1) est reliée à une sortie de gaz du séparateur à cyclone de lit fluidisé de réduction (3-3) par une conduite ; une sortie d'alimentation du dispositif de préchauffage à venturi (2-1) est reliée à une entrée d'alimentation du dispositif de préchauffage à cyclone (2-2) par une conduite ; une sortie d'alimentation du dispositif de préchauffage à cyclone (2-2) est reliée à une entrée d'alimentation du dispositif d'alimentation de matière contenant du vanadium (3-1) par une conduite ; une sortie de gaz du dispositif de préchauffage à cyclone (2-2) est reliée à une entrée de gaz du premier séparateur à cyclone (2-3) par une conduite ; une sortie de gaz du premier séparateur à cyclone (2-3) est reliée à un système de traitement de gaz de queue par une conduite ; et une sortie d'alimentation du premier séparateur à cyclone (2-3) est reliée à l'entrée d'alimentation du dispositif d'alimentation de matière contenant du vanadium (3-1) par une conduite ;
une sortie d'alimentation du dispositif d'alimentation de matière contenant du vanadium (3-1) est reliée à une entrée d'alimentation du corps de lit fluidisé de réduction (3-2) par une conduite ; une entrée d'air d'aération du dispositif d'alimentation de matière contenant du vanadium (3-1) est reliée à un tuyau principal d'azote gazeux par une conduite ; une sortie de gaz du corps de lit fluidisé de réduction (3-2) est reliée à une entrée de gaz du séparateur à cyclone de lit fluidisé de réduction (3-3) par une conduite ; une sortie d'alimentation du séparateur à cyclone de lit fluidisé de réduction (3-3) est reliée à une entrée d'alimentation du dispositif de décharge de lit fluidisé de réduction (3-4) par une conduite ; une sortie d'alimentation du corps de lit fluidisé de réduction (3-2) est reliée à l'entrée d'alimentation du dispositif de décharge de lit fluidisé de réduction (3-4) par une conduite ; une sortie d'alimentation du dispositif de décharge de lit fluidisé de réduction (3-4) est reliée à une entrée d'alimentation du refroidisseur à venturi (4-1) par une conduite ; une entrée d'air d'aération du dispositif de décharge de lit fluidisé de réduction (3-4) est reliée à un tuyau principal d'azote gazeux purifié par une conduite ; une entrée de gaz de réduction du corps de lit fluidisé de réduction (3-2) est reliée à une sortie de gaz du dispositif de préchauffage de lit fluidisé de réduction (3-5) par une conduite ; une entrée de gaz du dispositif de préchauffage de lit fluidisé de réduction (3-5) est reliée à une sortie de gaz du second séparateur à cyclone (4-3) par une conduite ; une entrée de gaz du dispositif de préchauffage de lit fluidisé de réduction (3-5) est reliée à une sortie de gaz de l'épurateur de gaz de réduction (3-6) par une conduite ; une entrée de gaz de l'épurateur de gaz de réduction (3-6) est reliée à un tuyau principal de gaz de réduction par une conduite ; et une entrée d'air et une entrée de carburant du dispositif de préchauffage de lit fluidisé de réduction (3-5) sont reliées respectivement à un tuyau principal d'air comprimé et à un tuyau principal de carburant ;
une entrée de gaz du refroidisseur à venturi (4-1) est reliée au tuyau principal d'azote gazeux purifié par une conduite ; une sortie d'alimentation du refroidisseur à venturi (4-1) est reliée à une entrée d'alimentation du refroidisseur à cyclone (4-2) par une conduite ; une sortie d'alimentation du refroidisseur à cyclone (4-2) est reliée à une entrée d'alimentation du dispositif de refroidissement secondaire d'oxyde de vanadium de faible valence (5) par une conduite ; une sortie de gaz du refroidisseur à cyclone (4-2) est reliée à une entrée de gaz du second séparateur à cyclone (4-3) par une conduite ; et une sortie d'alimentation du second séparateur à cyclone (4-3) est reliée à une entrée d'alimentation du dispositif de refroidissement secondaire d'oxyde de vanadium de faible valence (5) par une conduite ;
une sortie d'alimentation du dispositif de refroidissement secondaire d'oxyde de vanadium de faible valence (5) est reliée à une entrée d'alimentation de la trémie d'oxyde de vanadium de faible valence (6-1) par une conduite ; une entrée d'eau de refroidissement du dispositif de refroidissement secondaire d'oxyde de vanadium de faible valence (5) est reliée à un tuyau principal d'eau de procédé par une conduite ; et une sortie d'eau de refroidissement du dispositif de refroidissement secondaire d'oxyde de vanadium de faible valence (5) est reliée à un système de refroidissement par eau par une conduite ;
une sortie d'alimentation au fond de la trémie d'oxyde de vanadium de faible valence (6-1) est reliée à une entrée d'alimentation du dispositif d'alimentation à vis d'oxyde de vanadium de faible valence (6-2) ; et une sortie d'alimentation du dispositif d'alimentation à vis d'oxyde de vanadium de faible valence (6-2) est reliée à une entrée d'alimentation du réacteur de dissolution (7) par une conduite ;
une entrée d'eau propre du réacteur de dissolution (7) est reliée à un tuyau principal d'eau propre par une conduite ; une entrée d'acide sulfurique concentré du réacteur de dissolution (7) est reliée à un tuyau principal d'acide sulfurique concentré par une conduite ; une sortie de gaz du réacteur de dissolution (7) est reliée à une entrée de gaz du système de traitement de gaz de queue par une conduite ; et une sortie d'électrolyte du réacteur de dissolution (7) est reliée à une entrée d'électrolyte du dispositif d'activation d'électrolyte (8) par une conduite.

2. Système pour la préparation d'un électrolyte de valence spécifique, à activité élevée, d'une batterie à flux redox tout vanadium, selon la revendication 1, dans lequel le corps de lit fluidisé de réduction (3-2) est sous la forme d'une structure rectangulaire à double sortie à bacs multiples, et le lit fluidisé a un déflecteur vertical intégré, chaque sortie d'alimentation est munie d'une soupape enfichable, et deux sorties d'alimentation aux positions haute et basse sont respectivement reliées à l'entrée d'alimentation du dispositif de décharge de lit fluidisé de réduction (3-4) par des conduites.

3. Procédé pour la préparation d'un électrolyte de valence spécifique, à activité élevée, d'une batterie à flux redox tout vanadium, basée sur le système selon la revendication 1, comprenant les étapes suivantes :
amener de la matière contenant du vanadium à partir de la trémie de matière contenant du vanadium (1-1) à entrer dans le dispositif de préchauffage à venturi (2-1), le dispositif de préchauffage à cyclone (2-2) et le premier séparateur à cyclone (2-3) tour à tour par le dispositif d'alimentation à vis de matière contenant du vanadium (1-2), puis à entrer dans le corps de lit fluidisé de réduction (3-2) par le dispositif d'alimentation de matière contenant du vanadium (3-1) ; amener la poudre entraînée dans le gaz de queue à haute température, déchargé du corps de lit fluidisé de réduction (3-2) à être collectée par le séparateur à cyclone de lit fluidisé de réduction (3-3), puis à entrer dans l'entrée d'alimentation du dispositif de décharge de lit fluidisé de réduction (3-4) ; amener l'oxyde de vanadium de faible valence, réduit, à être déchargé d'une sortie d'alimentation du corps de lit fluidisé de réduction (3-2) et à entrer dans le refroidisseur à venturi (4-1) et le refroidisseur à cyclone (4-2) tour à tour par le dispositif de décharge de lit fluidisé de réduction (3-4), et à entrer dans le dispositif de refroidissement secondaire d'oxyde de vanadium de faible valence (5) et la trémie d'oxyde de vanadium de faible valence (6-1) conjointement avec la matière en poudre récupérée par le second séparateur à cyclone (4- 3) ; amener la matière à entrer dans le réacteur de dissolution (7) par le dispositif d'alimentation à vis d'oxyde de vanadium de faible valence (6-2), et à être soumise à une réaction de dissolution conjointement avec de l'eau propre provenant du tuyau principal d'eau propre et de l'acide sulfurique concentré provenant du tuyau principal d'acide sulfurique concentré pour obtenir un électrolyte primaire ; et amener l'électrolyte primaire dans le réacteur de dissolution (7) à entrer dans le dispositif d'activation d'électrolyte (8) par une conduite avec une soupape, et à être activé pour obtenir l'électrolyte de valence spécifique, à activité élevée, d'une batterie à flux redox tout vanadium ;
dans lequel de l'azote gazeux purifié entre dans le refroidisseur à venturi (4-1), le refroidisseur à cyclone (4-2) et le second séparateur à cyclone (4-3) tour à tour, et est mélangé avec le gaz de réduction purifié par l'épurateur de gaz de réduction (3-6) et préchauffé par le dispositif de préchauffage de lit fluidisé de réduction (3-5), puis entre dans le corps de lit fluidisé de réduction (3-2), de telle sorte que la poudre de matière contenant du vanadium est maintenue dans un état fluidisé et réduite ; le gaz de queue à haute température après réduction entre dans le séparateur à cyclone de lit fluidisé de réduction (3-3), le dispositif de préchauffage à venturi (2-1) et le dispositif de préchauffage à cyclone (2-2) tour à tour, et finalement est soumis à une élimination de poussière par le premier séparateur à cyclone (2-3), puis est transmis au système de traitement de gaz de queue ; et de l'azote gazeux de deux autres conduites provenant du tuyau principal d'azote gazeux purifié entrent respectivement dans le dispositif d'alimentation de matière contenant du vanadium (3-1) et dans le dispositif de décharge de lit fluidisé de réduction (3-4) ;
dans lequel de l'air comprimé et du carburant entrent respectivement dans une entrée d'air comprimé et dans l'entrée de carburant du dispositif de préchauffage de lit fluidisé de réduction (3-5) ;
dans lequel de l'eau de procédé du tuyau principal d'eau de procédé s'écoule dans une entrée d'eau du dispositif de refroidissement secondaire d'oxyde de vanadium de faible valence (5) et s'écoule hors d'une sortie d'eau du dispositif de refroidissement secondaire d'oxyde de vanadium de faible valence (5), puis entre dans le système de refroidissement par eau.

4. Procédé pour la préparation d'un électrolyte de valence spécifique, à activité élevée, d'une batterie à flux redox tout vanadium, selon la revendication 3, dans lequel la matière contenant du vanadium est une ou plusieurs parmi le pentoxyde de vanadium, le métavanadate d'ammonium et le polyvanadate d'ammonium.

5. Procédé pour la préparation d'un électrolyte de valence spécifique, à activité élevée, d'une batterie à flux redox tout vanadium, selon la revendication 3, dans lequel le gaz de réduction introduit dans l'épurateur de gaz de réduction (3-6) est un mélange d'un ou deux choisis parmi l'hydrogène gazeux, l'ammoniac gazeux, le gaz de four électrique, le gaz de convertisseur, le gaz de haut fourneau, le gaz de four à coke et le gaz de gazogène.

6. Procédé pour la préparation d'un électrolyte de valence spécifique, à activité élevée, d'une batterie à flux redox tout vanadium, selon la revendication 3, dans lequel, par le contrôle de la température de fonctionnement, du temps de séjour moyen de la poudre et de l'atmosphère réductrice dans le lit fluidisé de réduction, la valence moyenne du vanadium de l'oxyde de vanadium de faible valence dans le produit de réduction peut être n'importe quelle valeur dans la plage de 3,0 à 4,5 ;
dans lequel la température de fonctionnement dans le lit fluidisé de réduction est de 400 - 700°C, afin d'atteindre cette condition, la température correspondante du dispositif de préchauffage de lit fluidisé de réduction (3-5) est contrôlée pour être de 450 - 950°C ;
le temps de séjour moyen de la poudre est de 30 - 60 minutes, où, lorsque la valence moyenne du vanadium de l'oxyde de vanadium de faible valence cible est de 3,0 - 3,6, une sortie d'alimentation à une position haute est utilisée pour la décharge ; et lorsque la valence moyenne du vanadium de l'oxyde de vanadium de faible valence cible est de 3,6 - 4,5, une sortie d'alimentation à une position basse est utilisée pour la décharge ;
le contrôle de l'atmosphère réductrice signifie que la fraction volumique du gaz de réduction dans le gaz mélangé d'azote gazeux et du gaz de réduction est de 10 % - 90 %.

7. Procédé pour la préparation d'un électrolyte de valence spécifique, à activité élevée, d'une batterie à flux redox tout vanadium, selon la revendication 3, dans lequel, dans l'électrolyte de valence spécifique, à activité élevée, de la batterie à flux rédox tout vanadium préparé dans le réacteur de dissolution (7), la valence moyenne des ions vanadium est n'importe quelle valeur dans la plage de 3,0 - 4,5, la concentration des ions vanadium est dans la plage de 1,0 - 3,0 mol / L et la concentration d'acide sulfurique est dans la plage de 3,0 - 6,0 mol / L.

8. Procédé pour la préparation d'un électrolyte de valence spécifique, à activité élevée, d'une batterie à flux redox tout vanadium, selon la revendication 7, dans lequel, lorsque la valence moyenne des ions vanadium dans l'électrolyte est de 3,5, l'électrolyte est directement utilisé pour un nouvel empilement de batterie à flux redox tout vanadium.

9. Procédé pour la préparation d'un électrolyte de valence spécifique, à activité élevée, d'une batterie à flux redox tout vanadium, selon la revendication 3, dans lequel, dans le dispositif d'activation d'électrolyte (8), l'électrolyte est activé par application d'un champ de micro-ondes de manière externe avec le temps d'activation de 30 - 300 minutes, la température d'activation de 20 - 85°C, la densité de puissance micro-ondes de 10 - 300 W / L et la fréquence des micro-ondes de 2450 MHz ou 916 MHz.
